# EUROPEAN PATENT APPLICATION

(11) **EP 1 733 920 A1**
(43) Date of publication of application: **20.12.2006**
(21) Application number: 06380167.4
(22) Date of filing: 13.06.2006
(51) Int. Cl.: B60N 3/04

(54) **Heel plates for vehicle floor mats**

(30) Priority: 14.06.2005 ES 200501367 U
(71) Applicant: Ruz Montes, Santiago, 03690 San Vicente del Raspeig (AL) (ES); Cabrera Buades, Antonio, 03690 San Vicente del Raspeig (AL) (ES)
(72) Inventor: Ruz Montes, Santiago, 03690 San Vicente del Raspeig (AL) (ES); Cabrera Buades, Antonio, 03690 San Vicente del Raspeig (AL) (ES)
(74) Representative: Temino Ceniceros, Ignacio

(57) **Abstract**

Heel plate for vehicle floor mats, of the type used to prevent premature wear to the parts of the mat where the heels rest, easy to attach to vehicle floor mats, where the costs of that process are noticeably less than for those used up to now, and having a series of studs protruding from the lower surface of the flat plate, to which suction pads made from elastic material are fixed, allowing the fixing and removal of the heel plate to/from the vehicle floor mat through an equal number of holes in the mat, in such a way that when fixed, the free end of each of these suction pads, having been inserted through the holes in the mat, make contact with the floor of the vehicle, preventing both the heel plate and the mat from slipping.

## Description

### OBJECT OF THE INVENTION

This invention refers to a heel plate for vehicle floor mats, of the type used to prevent premature wear to the parts of the mats on which the heels rest.

The object of the invention is to provide a heel guard which is easy to attach to vehicle floor mats, and where the costs of that process are noticeably less than for those used up until now.

Another aim of the invention is that the heel plate should be easy to replace, without the need to change the mat to which it is attached.

### BACKGROUND TO THE INVENTION

Vehicles normally include, on the base or floor of their interiors, mats that prevent the vehicles' own carpeting becoming dirty or worn.

These mats do not usually have any fittings for fixing them to the vehicle's floor, since they are usually designed for use in many different models of vehicle, and may be bought in car dealerships, workshops, auto parts shops, etc.

This type of mat incorporates reinforcement in the heel area, called a heel plate, which may be of metal, PVC, or other materials. The aim of these heel plates is to prevent the premature wearing of the areas of the mat where the heels rest, thus lengthening notably their useful life.

The heel plates or pads are glued, sewn, or riveted to their corresponding mats to prevent them moving with respect to the mat, as that would render them useless.

However, the mat and heel plate are manufactured separately, and fixed together in a later phase of manufacture, when specific labour is used to sew, drill, and rivet the heel plates, and these processes have high associated production costs.

This type of mat also presents a problem in that once the heel plate is attached, it cannot be removed from the mat, so that in order to replace the heel plate for whatever reason, it is also necessary to replace the mat, incurring the cost that this implies.

### DESCRIPTION OF THE INVENTION

The heel plate for vehicle floor mats proposed by the invention provides a completely satisfactory solution to the different problems explained above, allowing the heel plate to be replaced without the need to change the mat it is attached to, providing a device which is easy to fix onto the mat and remove from it, and which considerably reduces the costs associated with the phase of attaching the heel plate to the mat.

For this, and more specifically, the proposed heel plate is made up in the usual way for this type of device, formed by a flat sheet or plate, sized to fit the area on the mat where the heels rest.

This flat sheet has an upper surface, designed to be in contact with the vehicle occupant's footwear, which incorporates a series of ridges or raised patterns aimed to give it non-slip properties.

The main characteristic of the invention is that several studs protrude from the lower surface of the flat plate, made of the same material as the plate, to which suction pads made of a soft and elastic material are fitted, allowing the heel plate to be fixed to the mat, the mat having been manufactured with a series of openings or holes which coincide in size and position with the aforementioned suction pads.

In this way the heel plate is easily and quickly fitted on the floor mat in the manufacturing process, in which the operator only has to fit the said suction pads on their respective holes in the mat, avoiding the need to rivet, sew it, etc. with the savings in production line costs which this implies.

In accordance with another characteristic of the invention, these suction pads, as well as stabilising the heel plate with respect to the mat, allow the heel plate to be fixed to the floor of the vehicle, preventing the mat slipping on the floor, unlike the usual case for traditional floor mats.

As mentioned before, the fact that the heel plate is easy to fit to and remove from the mat, permits it to be changed when it deteriorates without the need to replace the mat and, as both pieces may be manufactured in different colours, allows a great variety of combinations between them.

### DESCRIPTION OF THE DRAWINGS

To complement this description, and with the objective of enabling better comprehension of the characteristics of the invention, in accordance with an example of a preferred embodiment of same and as an integral part of the description, we have included a set of drawings of an illustrative and non-restrictive nature, representing the following:
Figure 1.- Shows a perspective upper view of a heel plate for vehicle floor mats, in accordance with the object of this invention.
Figure 2.- Shows a perspective lower view of the heel plate of the previous figure.
Figure 3.- Finally, shows a cross-section detail of one of the elements for fixing the heel plate to the mat.

### PREFERRED EMBODIMENT OF THE INVENTION

It can be seen in the figures referred to above how the heel plate (1) for vehicle floor mats which is the object of the invention is made up of, as is usual in this type of device, a flat sheet (2), which may be PVC, metallic, plastic, or of any other material which is suitable for preventing wear to the mat; in this practical example the mat is trapezoidal, with fully rounded corners (3), but it could have any other geometrical shape usual in this type of device, ie. rectangular, square, or similar, without this affecting the object of the invention.

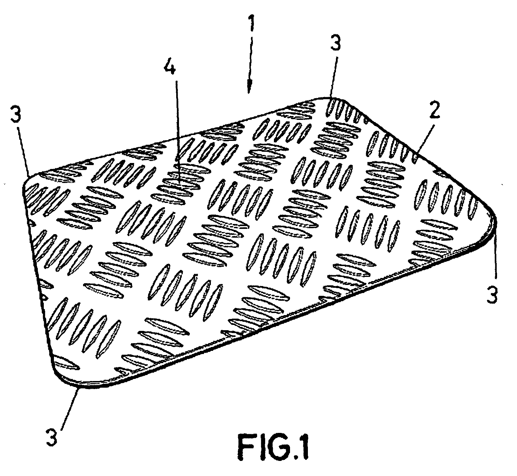

As can be seen in figure 1, the flat sheet (2) has many ridges or raised areas (4) in its upper surface to provide a non-slip surface for footwear.

The main characteristics of the proposed heel plate is the fact that a series of studs (5) protrude from the lower surface of the flat sheet (2), to which suction pads (6) are fitted, corresponding in size and position to a series of holes (7) in the mat (8) which allow the heel plate (1) to be fitted to it, and removed, easily and without the need for any type of tool or instrument.

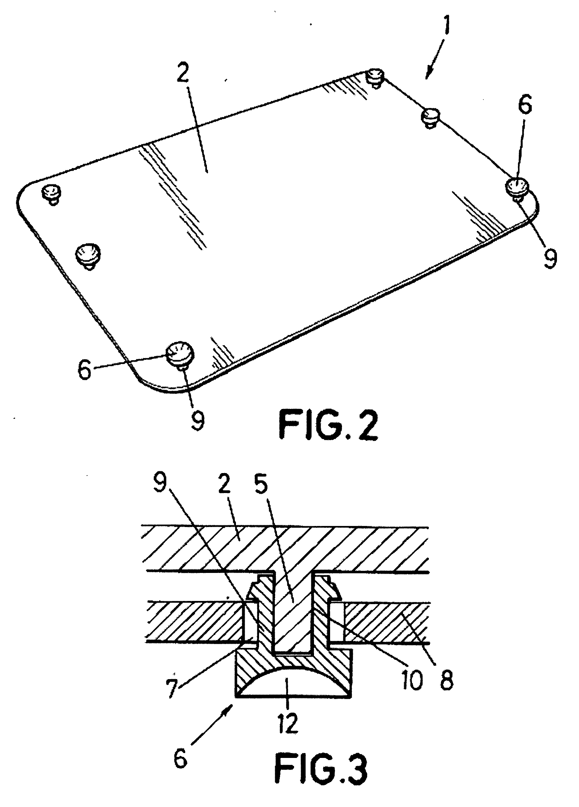

As can be seen in figure 3, the suction pads (6) are made up of a cylindrical body (9), with a blind opening at the upper end (10), sized to allow the corresponding stud (5) of the flat sheet (2) to be press-fixed into it, where the said body (9) has a stepped broader part (11) in its opposite or lower end, with a concave curved hollow (12) that, due to the soft nature of which the suction pad is made, as stated above, allows the heel plate (1)-mat (8) combination to be held fixed with respect to the vehicle floor.

## Claims

1. Heel plate for vehicle floor mats, of the sort which are made from a flat sheet sized to fit the area on the mat where the heels rest, **characterised in that** having a series of studs which protrude from the lower surface of the sheet, to which corresponding suction pads made of an elastic material are fitted, allowing the heel plate to be fixed to/removed from the vehicle floor mat by means of a series of openings the mat has been manufactured with, which coincide in number, size and position with the aforementioned studs, so that when fitted, the free end of each of the suction pads, once inserted through the openings in the mat, are in contact with the vehicle floor, preventing both the heel plate and the mat from slipping.

2. Heel plate for vehicle floor mats, according to claim 1, **characterised in that** the said suction pads, which are made with a cylindrical body, with a blind opening at one end, sized to allow the respective stud to be fitted to its interior by pressure, and where the said body has at its other end a stepped wider part with a concave curved hollow at its free end.

3. Heel plate for vehicle floor mats according to claims 1 and 2 above, **characterised in that** its upper surface incorporates a series of ridges or raised patterns to prevent slipping.
